# EUROPEAN PATENT SPECIFICATION

(11) **EP 3 781 354 B1**
(45) Date of publication and mention of the grant of the patent: **19.01.2022**
(21) Application number: 18721687.4
(22) Date of filing: 17.04.2018
(51) Int. Cl.: B25B 5/00, B25H 1/00, F16M 11/26, F16M 7/00, F16M 11/04

(54) **A MODULAR VERTICAL ADJUSTMENT APPARATUS FOR POSITIONING A WORKPIECE IN CLAMPING SYSTEMS**
VORRICHTUNG ZUR MODULAREN VERTIKALEN ANPASSUNG ZUR POSITIONIERUNG EINES WERKSTÜCKS IN SPANNSYSTEMEN
APPAREIL DE RÉGLAGE VERTICAL MODULAIRE POUR POSITIONNER UNE PIÈCE DANS DES SYSTÈMES DE SERRAGE

(43) Date of publication of application: 24.02.2021
(73) Proprietor: MULTINORM D.O.O., 32272 Cerna (HR)
(72) Inventor: MAGDIC, Milan, 84130 Dingolfing (DE)
(74) Representative: Sucic, Tatjana
(86) International application number: PCT/EP2018/025120
(87) International publication number: WO 2019/201413

(56) References cited:
- EP-A2- 1 043 116
- DE-U1- 29 807 366
- US-A- 5 253 504

## Description

### FIELD OF THE INVENTION

The present invention generally relates to a workpiece positioning and fixating systems, and more particularly to a modular vertical adjustment apparatus for positioning a workpiece in clamping systems.

### BACKGROUND OF THE INVENTION

Workpiece positioning and clamping systems are well known in the art. For example, such a clamping apparatus has been known from DE-A 197 16 874. It comprises one or more tensioners, which can be positioned on a clamping table and with which the workpiece, e.g., body parts of vehicles, can be clamped. The workpiece can then be welded or machined in another way by an industrial robot or the like. The tensioners are of a multipart design and comprise a foot part, a middle part and a head part, which are guided adjustably relative to another along at least one axis. A positioning apparatus with vertical adjustment apparatus and a fixing device are present for the mutual adjustment. The vertical adjustment apparatus comprises one or more adjusting screws between the parts of the tensioner. The overall length (x) of the clamp part is varied by the user of the holder to suit the held part (W) by a lower height adjuster 7 attached to the horizontal leg of the lower part acting on the lower end of the central piece and by an upper height adjuster 10 seated on the upper end of the middle part.

U.S. Pat. No.6,322,063 discloses another clamping apparatus comprising one or more tensioners, which can be positioned on a clamping table. The tensioners have a plurality of tensioner parts, which are guided adjustably in relation to one another along at least one axis and which have a positioning apparatus with a vertical adjustment device and a fixing device for the mutual adjustment. The vertical adjustment has a coarse adjustment device and a fine adjustment device, wherein the coarse adjustment device has a grid-like mount and a hinge pin on one tensioner part and the fine adjustment device has a support and optionally one or more fitting plates and a fixing device for supporting the hinge pin on the other tensioner part.

U.S. Pat. No.6,364,302 discloses a modular system and fixture for positioning and clamping a workpiece 5 comprises a riser 7, a modular positioning blade 9, and a clamp assembly 11. More particularly, riser 7 includes a mounting plate 18 and a seat plate 21, with a stiffening support 23 fastened between them to add to the rigidity and ability of riser 7 to support significant loads. Modular positioning blade 9 is mounted to a top portion 24 of each riser 7. A plurality of positioning-bores 25 and mounting-bores 26 are defined in top portion 24 of each riser 7. Positioning-bores 25 are accurately sized and shaped, and selectively and precisely located in top portion 24 for operatively locating modular positioning blade 9 on riser 7, via dowel pins 27. Conventional fasteners, e.g., bolts 28 or the like, are positioned through mounting-bores 26 so as to fasten modular positioning blade 9 to top portion 24 of riser 7.

Clamping pallets for workpieces on machine tools or gaging machines have been known from DE-A 195 36 341, DE-A 42 43 370 and DE-A 38 01 813. The tensioners have clamping claws, which are vertically adjustable by apparatus of adjusting screws, toothed plates or the like. In DE-A 42 43 370 two guide columns 2, 3 are arranged vertically and parallel to each other. These are bar-shaped and synchronously movable in a basic body 1. Each of the guide columns is provided with a row of equally horizontally and radially directed securing holes 8 equally spaced apart and via an adjustment bolt 10 can be adjusted to adequately arranged securing holes 9 in the guide column axial position 7 in the basic body. DE29807366U1 is considered to be the closest prior art and discloses a modular vertical adjustment apparatus for positioning a workpiece comprising a clamping part, which consists of several exchangeable, interconnected components, the clamping part is fixed to the modular apparatus by means of a head part, wherein said modular vertical adjustment apparatus comprises two mutually compatible modules consisting of a base and a vertical adjustment component, the base is a stationary part fixed to a bedplate and the vertical adjustment component is a movable part, where the base is shaped as a hollow component, the base has a hollow interior forming a cavity and an open upper surface, wherein the vertical adjustment component is sized and shaped to fit within the cavity and to provide sliding of the vertical adjustment component along the hollow interior of the base in a vertical direction.

Technical solution known from aforesaid prior art documents disclose only limited adjustment in vertical direction of the workpiece and thereby low flexibility.

The present invention relates essentially to the positioning and fixing of various parts in manual production and automated production processes, particularly in industries that combine complicated parts made of metal, plastic, glass-plastic, plastic with carbon fibers. Apparatus and tools for positioning and fixing parts in production processes are known. Mechanical, pneumatic, hydraulic, electric-pneumatic and electrical elements are also known for picking and positioning the parts. Between the base bearing surface and the elements for positioning and fixing the parts, due to the complex geometry, in most cases it is necessary to adjust a bracket to the production conditions. These brackets for each new product are re-planed, constructed, and produced what causes increasing of costs. Thus, specially manufactured parts for reaching each new production conditions are not cost effective.

Based on this, the present invention seeks to further develop the known devices for clamping workpieces, in particular vehicle body parts, in such a way that easy handling combined with an extremely sensitive height adjustability, broader range of vertical adjustment of a workpiece is possible with little design effort.

### SUMMARY AND OBJECTS OF THE INVENTION

The invention is defined in claim 1.

The present invention provides a modular vertical adjustment apparatus for positioning a workpiece in a clamping system. One aspect of the present invention provides two mutually compatible modules consisting of a base and a vertical adjustment component, the base is a stationary part fixed to a bedplate and the vertical adjustment component is a movable part, where the base and the vertical adjustment component each are shaped as a hollow component.

The vertical adjustment component is sized and shaped to fit within a cavity of the base and to provide sliding of the vertical adjustment component along a hollow interior of the base in a vertical direction.

A screw shaft and a cooperating pair of nuts are provided for vertically moving and fixing the vertical adjustment component in relation to the base at predetermined height.

The modular vertical adjustment apparatus further comprises a bracket, where the base and the vertical adjustment component are carried out in two standardized heights, and the bracket in one standardized height, but said components can be carried out in more different heights providing the vertical adjustment of the workpiece in a broad range.

The modular vertical adjustment apparatus for positioning the workpiece is provided with additional components for preventing shear dislocation of the vertical adjustment component within the base, namely a first tensioner, a second tensioner, a third tensioner and additional arrangement consisting of a plurality of through-bores interlocked by at least one stud bolt.

Numerous advantages are obtained by employing the present invention.

More specifically, a vertical adjustment apparatus for positioning a workpiece in clamping systems is provided which provides vertical adjustment of a workpiece in a range at least from 225 to 1025 mm.

In addition, a vertical adjustment apparatus for positioning a workpiece in clamping systems is provided which does not require well trained and technically sophisticated personnel to properly operate.

Furthermore, a vertical adjustment apparatus for positioning a workpiece in clamping systems is provided which reduces the cost and complexity associated with the accurate positioning of a workpiece, such as a portion of an automobile.

Also, a vertical adjustment apparatus for positioning a workpiece in clamping systems is provided which incorporates a modular design that allows for fine adjustments of the position of a workpiece through the selection of easily identifiable, standardized modular components that are easily assembled to accommodate a plurality of required workpiece locations.

### BRIEF DESCRIPTION OF THE DRAWINGS

These and other features and advantages of the present invention will be more fully disclosed in, or rendered obvious by, the following detailed description of the preferred embodiment of the invention, which is to be considered together with the accompanying drawings wherein like numbers refer to like parts and further wherein:
FIG. 1 is a side elevational view of the modular vertical adjustment apparatus for positioning a workpiece in a clamping system in accordance with the present invention;
FIG. 2 is a perspective view of a plurality of modular vertical adjustment apparatus for positioning a workpiece in accordance with the present invention;
FIG. 3 is a perspective view of a modular vertical adjustment apparatus for positioning a workpiece in accordance with one embodiment of the present invention;
FIG. 3a is a cross section view of a fixture between a base/stationary part and a vertical adjustment component/movable part in accordance with one embodiment of the present invention;
FIG. 4 is a perspective view of a modular vertical adjustment apparatus for positioning a workpiece formed in accordance with another embodiment of the present invention;
FIGS. 4a and 4b illustrate a cross section view of a fixture between a base and a vertical adjustment component of the present invention illustrated in FIG. 4;
FIG. 5a is a side elevational view of a modular vertical adjustment apparatus for positioning a workpiece formed in accordance with another embodiment of the present invention;
FIG. 5b is a perspective view of embodiment of the present invention illustrated in FIG. 5a;
FIG. 6a is a cross section elevational view of the present invention, section view A-A, section view B-B of a fixation means and components for preventing shear dislocation of a vertical adjustment component a within a base of the present invention;
FIG. 6b is a cross section view of a second tensioner in accordance with present invention;
FIG. 6c is a perspective view of embodiment of the present invention illustrated in FIG. 6a;
FIG 6d is a perspective view of embodiment of the present invention illustrated in FIGS. 6a and 6c;
FIG. 7 is a perspective view of a modular vertical adjustment apparatus for positioning a workpiece where height/vertical adjustment of a workpiece is performed by an electro motor; and
FIG. 8 is a perspective view of a modular vertical adjustment apparatus for positioning a workpiece where horizontal/lateral adjustment of a workpiece is performed by a horizontal guide.

### DETAILED DESCRIPTION OF THE PREFERRED EMBODIMENT

This description of preferred embodiments is intended to be read in connection with the accompanying drawings, which are to be considered part of the entire written description of this invention. In the description, relative terms such as "horizontal," "vertical," "up," "down," "top" and "bottom" as well as derivatives thereof (e.g., "horizontally," "downwardly," "upwardly," etc.) should be construed to refer to the orientation as then described or as shown in the drawing figure under discussion. These relative terms are for convenience of description and normally are not intended to require a particular orientation. Terms including "inwardly" versus "outwardly," "longitudinal" versus "lateral" and the like are to be interpreted relative to one another or relative to an axis of elongation, or an axis or center of rotation, as appropriate. Terms concerning attachments, couplings and the like, such as "connected" and "interconnected," refer to a relationship wherein structures are secured or attached to one another either directly or indirectly through intervening structures, as well as both movable or rigid attachments or relationships, unless expressly described otherwise. The term "operatively connected" is such an attachment, coupling or connection that allows the pertinent structures to operate as intended by virtue of that relationship.

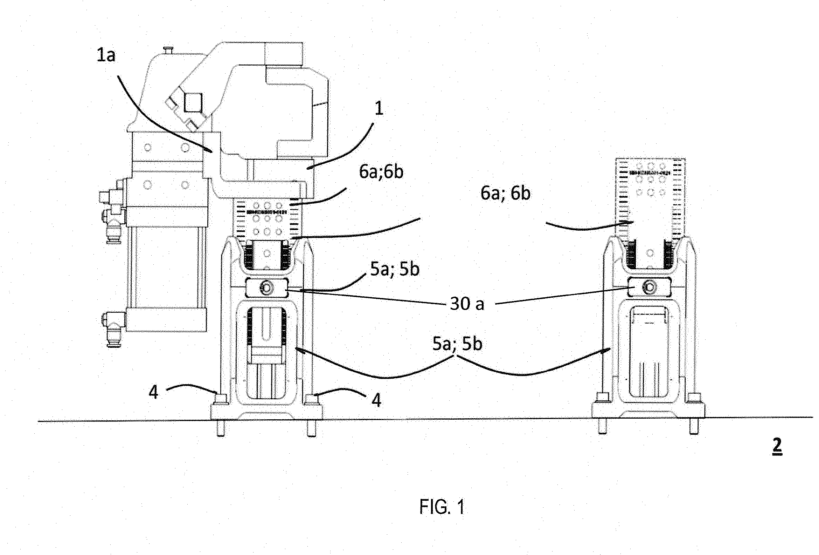

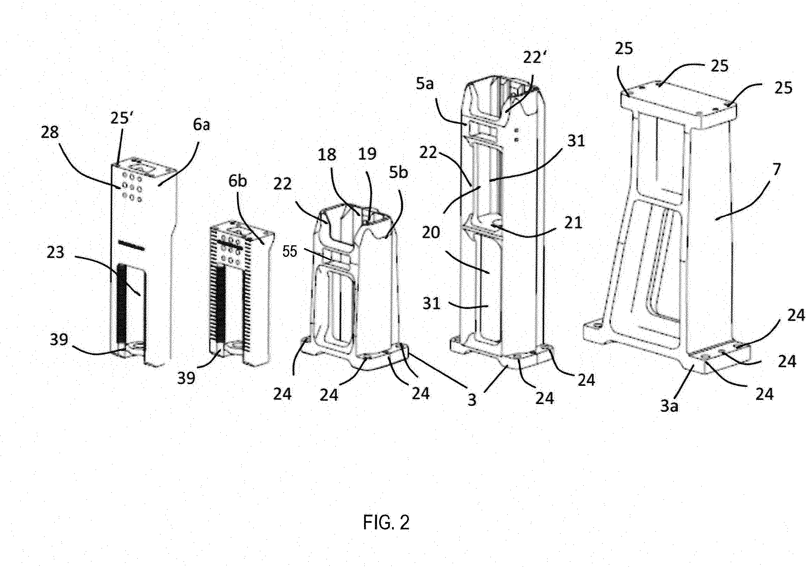

Referring to FIGS. 1 and 2, a modular vertical adjustment apparatus for positioning a workpiece, such as a portion of an automobile, is used in clamping systems for receiving and holding the workpieces of complicated geometry, comprising a commercially available clamping part, which consists of several exchangeable, interconnected components. The clamping part is fixed to the modular apparatus by means of a head part 1, the head part comprising an arm 1a and plurality of fasteners provided in the arm 1a and in the head part 1, such as screws and nuts, for fixing the head part 1 to a vertical adjustment component 6a; 6b and any clamping system to the arm 1a. The modular vertical adjustment apparatus is by virtue of fasteners 4 such as screws fixed to a bedplate 2.

In accordance with the present invention, the modular vertical adjustment apparatus has the advantage that a small number of standard elements are sufficient for a broad field of application. By means of only five basic parts, made in a simple and defined manner, continuous vertical adjustment is possible with high accuracy and reproducibility. Technical solution solved by the present invention provides a vertical adjustment of the workpiece in a range at least from 225 to 1025 mm, however broader ranges may be achieved with same five basic parts where different heights of each of said five parts may be provided. The vertical adjustment of the workpiece can be a coarse adjustment and a fine adjustment. Referring to FIG. 2, the vertical adjustment apparatus for positioning the workpiece comprising a base 5a; 5b, a vertical adjustment component 6a; 6b and a bracket 7, wherein all said components are mutually modular and may be carried out in different heights. FIG. 2 illustrates the base 5a; 5b, the vertical adjustment component 6a; 6b carried out in two standardized heights, and the bracket 7 in one standardized height, but said components can be carried out in more different heights providing the vertical adjustment of the workpiece in the broader range than aforesaid.

The modular vertical adjustment apparatus for positioning the workpiece is provided with cooperating means for preventing a shear dislocation of the vertical adjustment component 6a; 6b within the base 5a; 5b, namely a first tensioner 8, a second tensioner 30a, a third tensioner 30 and an arrangement consisting of a plurality of through-bores interlocked by at least one stud bolt 32. One modular vertical adjustment apparatus for positioning the workpiece may mutually combine said cooperating means for preventing the shear dislocation.

A screw shaft 10 and the pair of nuts 11 are provided to fixedly secure and to enable vertical translation of the vertical adjustment component 6a; 6b within the base 5a; 5b.

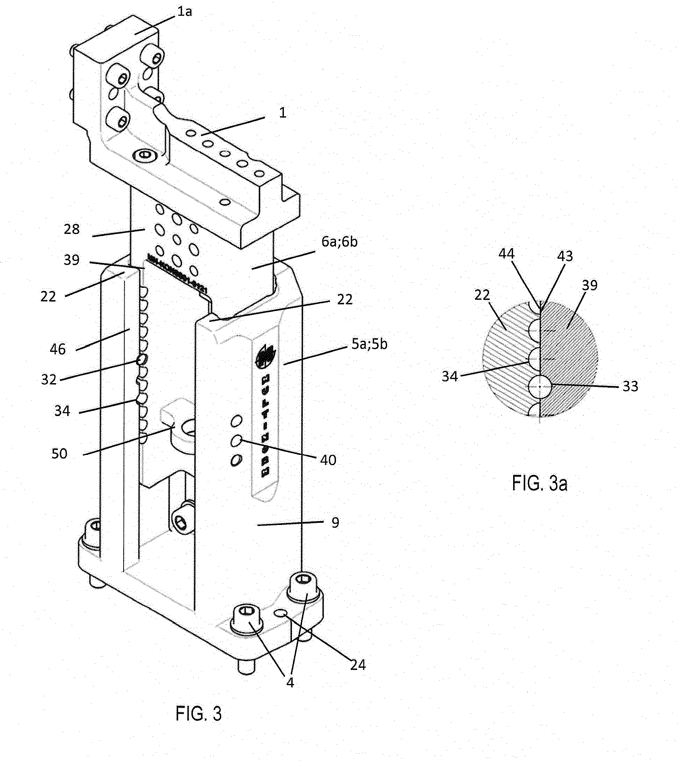

Referring to FIGS. 3 to 8, in the preferred embodiment of the invention, each modular vertical adjustment apparatus generally comprises two components, the base 5a; 5b and the vertical adjustment component 6a; 6b, wherein the vertical adjustment component 6a; 6b can slide inside a cavity 31 of the base 5a; 5b in the vertical direction. Therefore, the base 5a; 5b is a stationary part and the vertical adjustment component 6a; 6b is a movable part. The base 5a; 5b comprises a foot part 3 provided with at least four evenly disposed mounting bores 24 for receiving fasteners 4 to fasten the base 5a; 5b to the bracket 7 or to the bedplate 2. The bracket 7 comprises at a foot part 3a at least four mounting bores 24 that are sized and shaped to receive releasable fastener 4, such as screws to thereby releasably fasten the bracket 7 to the bedplate 2. An upper flat surface of the bracket 7 comprises at least four through-bores 25 that are sized and shaped to receive releasable fasteners 4 to thereby releasably fasten the foot part 3 of the base 5a; 5b to the upper flat surface of the bracket 7. The base 5a; 5b forms an "U" shaped support, preferably of a rectangular cross-section, namely its interior is hollow forming the cavity 31, the cavity 31 is sized and shaped to receive the vertical adjustment component 6a; 6b. A back side of the base 5a; 5b is closed by a back panel 18, the back panel 18 may comprise at least one vertically positioned and threated bore 38. The threated bores 38 are arranged in a vertical direction along a vertical centerline of the panel 18. A front side of the "U" shaped base 5a; 5b, depending on the height of the base 5a; 5b, comprises one or two openings 20. In the embodiment of the base 5a; 5b of a smaller height, the base 5a; 5b comprises one opening 20. The front side of the base 5a; 5b is in parallel relation to the back panel 18. In embodiment of the base 5a; 5b with two openings 20, one opening 20 is positioned at an upper part of the front side of the base 5a; 5b, and the other opening is positioned at a lover part of the front side the base 5a; 5b. Two openings 20 are separated by a first lateral plate 21, the first lateral plate 21 is in parallel relation to the bedplate 2. The base 5a; 5b comprises two cogs 22, each cog 22 is laying in vertical direction along vertically directed edges of the opening 20 positioned at the front side of the base 5a; 5b. The cogs 22 are facing each other in the plane defining the front side of the base 5a; 5b, the cogs 22 are in parallel relation to the back panel 18. Outer side surfaces 9 of the base 5a; 5b are carried out as panels, each side surface 9 may comprise a niche with at least one through-bore 40 that is sized and shaped to receive releasable fastener 35 to thereby releasably fasten the third tensioner 30. A front side of the base 5a;5b comprises two openings 20 divided by a vertical panel 13, the panel 13 comprises an opening 55 sized and shaped to receive the second tensioner 30a. The vertical adjustment component 6a; 6b is formed as a hollow component, preferably of a rectangular cross-section, namely its interior is hollow forming a cavity 23. In one embodiment of the present invention, the cavity 23 has rectangular cross section. In another embodiment of the present invention, the cross section of the cavity 23 has the form of an isosceles trapezoid with one base in parallel relation to a back panel 26 of the vertical adjustment component 6a; 6b and with slanted vertical side inner walls 51. At a lower portion of the cavity 23 a second lateral plate 50 is provided, the second lateral plate 50 is in parallel relation to the bedplate 2. The second lateral plate 50 comprises a central bore 49 through which a screw shaft 10 passes where one of the nuts 11 abuts on an upper side of the second lateral plate 50 and the other nut 11 abuts on a lower side the second lateral plate 50. The vertical adjustment component 6a; 6b is sized and shaped to fit within the cavity 31 and to provide sliding of the vertical adjustment component 6a; 6b within the base cavity 31 of the base 5a; 5b. Particularly, an outer shape of the vertical adjustment component 6a; 6b coincide with an inner shape of the cavity 31 of the base 5a; 5b in order to enable vertical translation of the vertical adjustment component 6a; 6b within the cavity 31 of the base 5a; 5b. A back side of the vertical adjustment component 6a; 6b is closed by the back panel 26. The back panel 26 may comprise a vertically positioned and centered slot or plurality of through-bores 19. A lower portion of a front side of the vertical adjustment component 6a; 6b comprises an opening 27 of a rectangular shape with two vertically oriented mutually facing edges 39, and an upper portion of a front side of the vertical adjustment component 6a; 6b is closed by a front panel 28. In one embodiment of the present invention, surfaces defining both edges 39 are in mutual parallel relation and in parallel relation to a side walls of the vertical adjustment component 6a; 6b. In another embodiment of the present invention, surfaces defining both edges 39 are slanted.

The back panel 26 may comprise a vertically positioned and centered slot (not shown) or plurality of through-bores 19 for receiving at least one fastener 37 to fasten the vertical adjustment component 6a; 6b to the base 5a; 5b by virtue of the first tensioner 8. The front panel 28 may or may not comprise plurality of bores. The side walls of the vertical adjustment component 6a; 6b are carried out as parallel flat panels. The opening 27 is in a form rectangular cross-section and is arranged symmetrically in a vertical direction along a vertical centerline of the vertical adjustment component 6a; 6b.

In accordance with one embodiment of the present invention as illustrated in FIGS. 3, 3a, the screw shaft 10 and the pair of nuts 11 are provided to fixedly secure and to enable vertical translation of the vertical adjustment component 6a; 6b within the base 5a; 5b. Additional fixing and preventing shear dislocation of the vertical adjustment component 6a; 6b to the base 5a; 5b is performed by means of a plurality of semi-circular holes 34 arranged in the base 5a; 5b and by a plurality of semi-circular counter holes 33 arranged in the vertical adjustment component 6a; 6b, the semi-circular holes 34 and 33 are mutually interlocked by at least one stud bolt 32. The plurality of semi-circular holes 34 arranged in the base 5a; 5b and correspondingly arranged a plurality of semi-circular counter holes 33 in the vertical adjustment component 6a; 6b are set to mutually face each other. The plurality of semi-circular holes 34 are arranged in parallel and extend horizontally along a second contact surface 44 of the cog 22, the second contact surface 44 is directed towards the base cavity 31 of the base 5a; 5b. The plurality of semi-diameters 33 are arranged in parallel and extend horizontally from an edge 39 along a first contact surface 43 of the vertical adjustment component 6a; 6b, the edge 39 and the first contact surface 43 abut on the cog 22 and the second contact surface 44 of the base 5a; 5b. The first contact surface 43 of the vertical adjustment component 6a; 6b and the second contact surface 44 of the base 5a; 5b are facing each other. Each outer side surface 9 of the base 5a; 5b, along a vertical plane passing through mutually facing surfaces 43 and 44, comprises a plurality of through-bores 40 sized and shaped to receive the stud bolt 32 to thereby fasten at the predetermined height the vertical adjustment component 6a; 6b to the base 5a; 5b. Fastening of the vertical adjustment component 6a; 6b to the base 5a; 5b is carried out by mutually adjusting the semi-circular counter holes 33 and semi-circular holes 34 as to form a plurality of through-bores in order to receive at least one stud bolt 32 to thereby fasten at the predetermined height the vertical adjustment component 6a; 6b to the base 5a; 5b. A pitch between two adjacent semi-circular holes is of 5 mm. The height adjustment and fixing of the vertical adjustment component 6a; 6b in relation to the base 5a; 5b is carried out by the screw shaft 10 and the pair of nuts 11. In addition to fastening by at least one stud bolt 32, fixedly securing of the vertical adjustment component 6a; 6b to the base 5a; 5b may be carried out by means of the first tensioner 8.

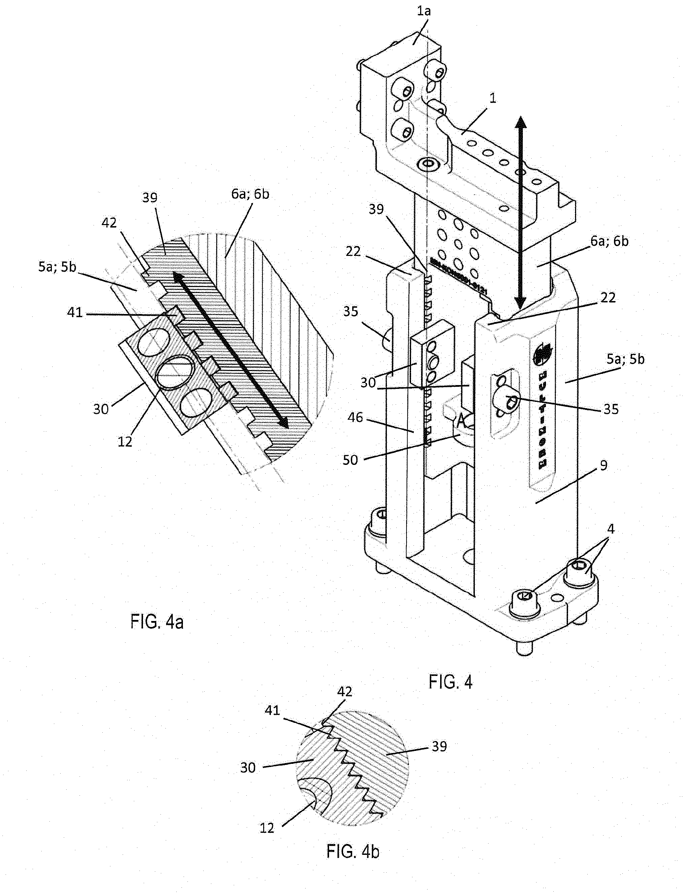

In accordance with another embodiment of the present invention as illustrated in FIGS. 4, 4a, and 4b additional fixing and shear preventing of the vertical adjustment component 6a; 6b in relation to the base 5a; 5b is carried out by means of two third tensioners 30, a first toothed surface 41 and a second toothed surface 42. Each vertically directed edge 39 of the opening 27 of the vertical adjustment component 6a; 6b comprises a plurality of teeth forming the second toothed surface 42, the second toothed surface 42 is extending from the edge 39, in the lateral direction away of the edge 39, along the first contact surface 43. The lateral length of teeth of the first 41 and second toothed surface 42 depends on the load to withstand and is calculated accordingly. In this embodiment, each third tensioner 30 comprise the first toothed surface 41 which engage the second toothed surface 42, teeth of each said toothed surface are sized and shaped for mutual engagement. Each third tensioner 30 is fixed to the base 5a; 5b by virtue of the through-bore 40 that is sized and shaped to receive releasable fastener 35 to thereby releasably fasten the third tensioner 30 to thereby releasably fasten the vertical adjustment component 6a; 6b to the base 5a; 5b. Outer side surfaces 9 of the base 5a; 5b are carried out as panels, each side surface 9 at predetermined height comprises the niche with at least one through-bore 40 passing through said panels to enable fastening the third tensioner 30, wherein the first toothed surface 41 of each third tensioner 30 is engaged with the second toothed surface 42, by virtue of fastener 35 to thereby releasably fasten the vertical adjustment component 6a; 6b to the base 5a; 5b. Each third tensioner 30 includes at least one internal bore 12 having a threaded portion that threadingly engages the fastener 35 to thereby fix the vertical adjustment component 6a; 6b to the base 5a; 5b at certain height, depending on the requirements of the production process. Each third tensioner 30 is mounted on oppositely arranged surfaces 46 of each cog 22, each surface 46 of each cog 22 is arranged in mutually parallel relation to one another, wherein each surface 46 is in parallel relation to outer side surfaces 9 of the base 5a; 5b. Each first toothed surface 41 of each third tensioner 30 is arranged in orthogonal relation to each surface 46 of each cog 22. Each oppositely arranged third tensioner 30, by means of the first toothed surface 41 that engage the second toothed surface 42 and by means of each fastener 35, hold the vertical adjustment component 6a; 6b engaged with the base 5a; 5b and provide accurate positioning of the workpiece. The shape of teeth of the first toothed surface 41 and of the second toothed surface 42 may be rectangular, triangular or of any other suitable shape. A pitch between two adjacent teeth is of 5 mm. Vertical translation of the vertical adjustment component 6a; 6b in relation to and within the base 5a; 5b is provided by the screw shaft 10 and the pair of nuts 11. In addition to fastening by the third tensioners 30, fixedly securing of the vertical adjustment component 6a; 6b to the base 5a; 5b may be carried out by means of the first tensioner 8.

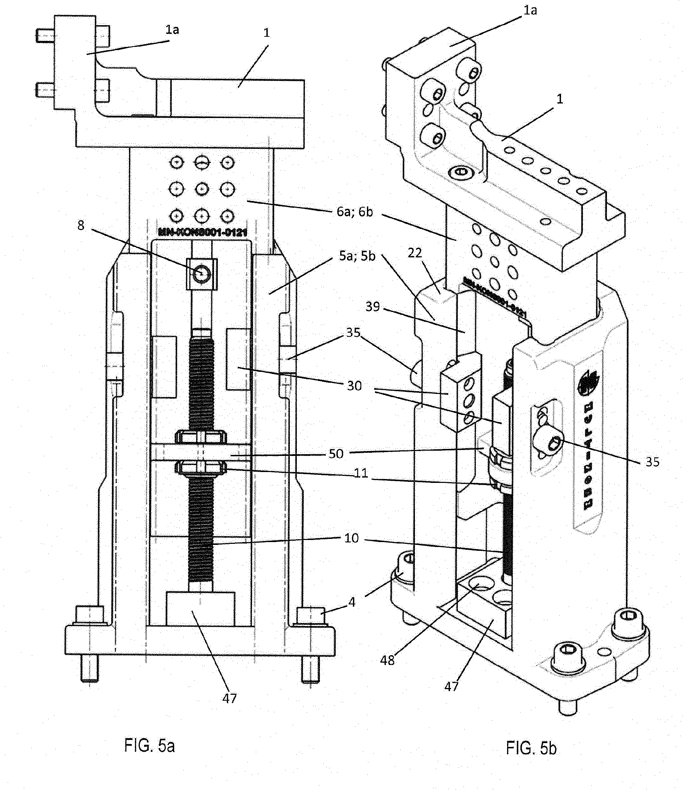

FIGS. 5a and 5b illustrate vertical translation of the vertical adjustment component 6a; 6b in relation to and within the base 5a; 5b by the screw shaft 10 and the corresponding pair of nuts 11 arranged on the screw shaft 10, one nut 11 is abuts under the second lateral plate 50 and the other nut 11 abuts over the second lateral plate 50. The screw shaft 10 is positioned vertically inside a central part of the cavity 31 and the cavity 23, extending from a bed plate 47 and is passing through the central bore 49 of the second lateral plate 50. The nuts 11 are arranged on each side of the second lateral plate 50. The bed plate 47 comprises at least one bore 48 for receiving and retaining the screw shaft 10. The bore 48 may have closed bottom in which case vertical translation of the vertical adjustment component 6a; 6b in relation to and within the base 5a; 5b is performed by virtue of the pair of nuts 11. In another embodiment of the present invention, the bore 48 is a through-bore and the screw shaft 10 may be operatively connected to an electromotor 16, the electromotor 16 rotates the screw shaft 10 and performs vertical translation of the vertical adjustment component 6a; 6b in relation to and within the base 5a; 5b in which case, after positioning at predetermined height of the vertical adjustment component 6a; 6b, the pair of nuts 11 are tied to secure the vertical adjustment component 6a; 6b. In addition, after positioning at predetermined height of the vertical adjustment component 6a; 6b and fixedly securing it by the pair of nuts 11, said component 6a; 6b may additionally be fixedly secured to the base 5a; 5b by virtue of two third tensioners 30 and corresponding fasteners 35, as previously disclosed, and/or by means of the first tensioner 8.

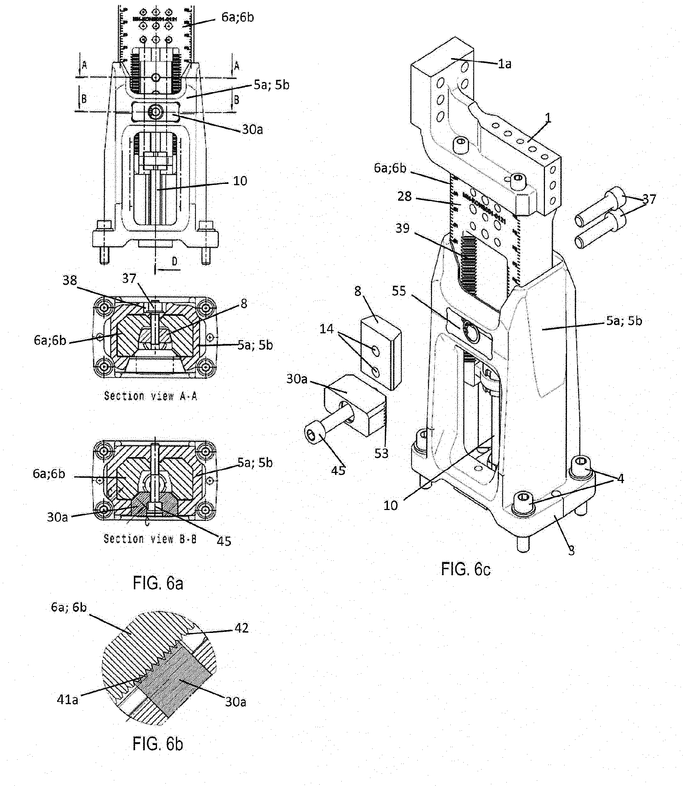

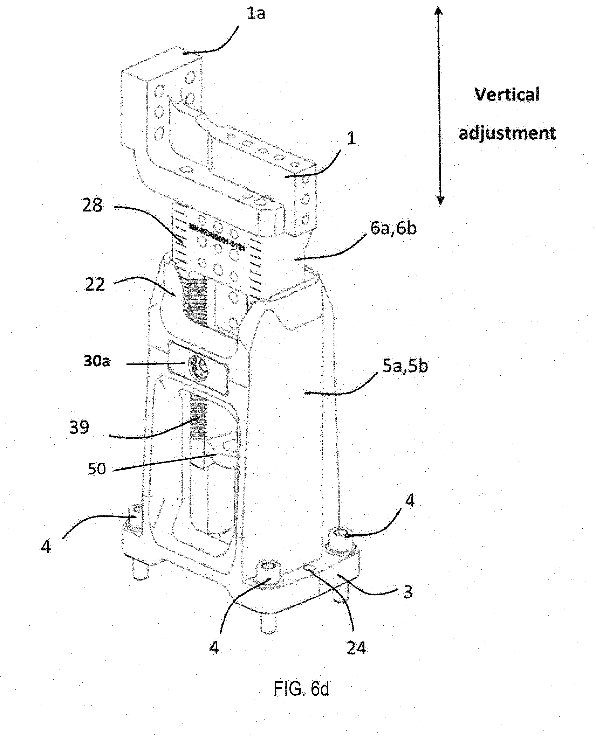

FIGS. 6a to 6d illustrate the modular vertical adjustment apparatus for positioning the workpiece comprising the first tensioner 8 and the second tensioner 30a, each of said tensioners is positioned in a lateral plane in parallel to the bedplate 2. The vertical translation of the vertical adjustment component 6a; 6b in relation to and within the base 5a; 5b is provided by the screw shaft 10 and the cooperating pair of nuts 11. The first tensioner 8, in its cross section has the form of an isosceles trapezoid, is provided with two sloped fastening surfaces to withstand higher loads and to prevent slippage of the vertical adjustment component 6a; 6b within the base 5a; 5b. Two sloped fastening surfaces of the first tensioner 8 are abutting to the slanted vertical inner side walls 51 of the vertical adjustment component 6a; 6b. A cross sections of the first tensioner 8 and of the cavity 23 of the vertical adjustment component 6a; 6b are sized and shaped for mutual engagement. The first tensioner 8 comprises at least one internal bore 14 having a threaded portion that threadingly engages at least one fastener 37 to thereby fasten at the predetermined height the vertical adjustment component 6a; 6b to the base 5a; 5b. The fastener 37 passes through the threated bore 38 of the back panel 18 to thereby releasably fasten the first tensioner 8 and the vertical adjustment component 6a; 6b to the base 5a; 5b. The first tensioner 8 and the threated bore 38 are arranged at the upper part of the base 5a; 5b.

The second tensioner 30a is arranged below and in parallel relation to the first tensioner 8. To withstand higher loads and to prevent slippage of the vertical adjustment component 6a; 6b within the base 5a; 5b, the second tensioner 30a is provided with a toothed surface 41a which engages the second toothed surface 42, teeth of each said toothed surfaces are sized and shaped for mutual engagement. The second toothed surface 42 is arranged along each vertically oriented edge 39 of the vertical adjustment component 6a; 6b. The second tensioner 30a comprises a through-bore that is sized and shaped to receive a releasable fastener 45 to thereby releasably fasten the second tensioner 30a to the base 5a; 5b. The releasable fastener 45 passes through a center of the second tensioner 30a and through at least one through-bore, arranged at the back panel 18, said through-bore having a threaded portion that threadingly engages the fastener 45 to thereby fix the vertical adjustment component 6a; 6b to the base 5a; 5b at certain height. The second tensioner 30a in a cross section has the form of a rectangular parallelepiped having two beveled edges 53, the beveled edges 53 are positioned to abut on the vertically oriented and slanted edge 39 of the vertical adjustment component 6a; 6b. In this embodiment, each vertically oriented edge 39 is slanted and is extending from an edge of the vertical side inner wall 51 to an edge of the first contact surface 43 of the vertical adjustment component 6a; 6b. Each vertically positioned and slanted edge 39 comprises a plurality of teeth forming the second toothed surface 42. Each of two beveled edges 53 of the second tensioner 30a comprises plurality of teeth forming a toothed surface 41a. When the vertical adjustment component 6a; 6b is positioned at desired height, the second tensioner 30a is placed in the opening 55, the toothed surface 41a engages the second toothed surface 42 and the second tensioner 30a is fixed by the fastener 45 to the base 5a; 5b. By mutual engagement of two toothed surfaces 41a of two beveled edges 53 and two second toothed surfaces 42 of two vertically oriented slanted edges 39 shear dislocation between the component 6a; 6b and the base 5a; 5b is prevented, and in addition these components fixedly secure the vertical adjustment component 6a; 6b to the base 5a; 5b.

In accordance with the present invention, vertically moving and fixing, at predetermined height, of the vertical adjustment component 6a; 6b in respect of the base 5a; 5b is performed manually, or by means of an electric motor 16.

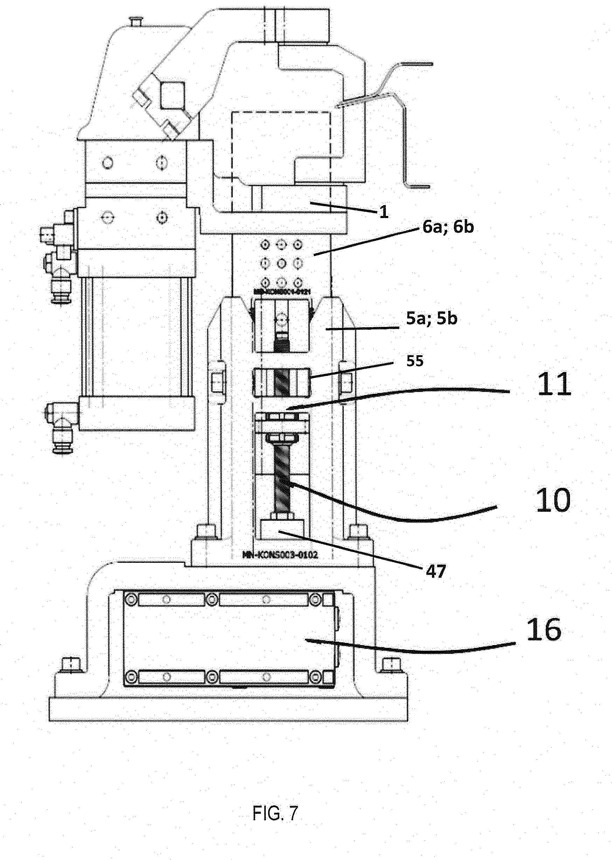

FIG. 7 illustrates a modular vertical adjustment apparatus for positioning a workpiece where vertical adjustment of a workpiece is performed by a motor drive. In the embodiment shown, an electro motor 16 is provided, the electro motor 16 is positioned beneath the modular vertical adjustment apparatus for positioning the workpiece and operably connected to the screw shaft 10. The height adjustment of the workpiece is controlled by the electric motor 16 preferably designed as a remotely controllable electro motor 16. The electro motor 16 may be programmed while adapting to different parts of the production process. The electro motor 16 may have any desired design.

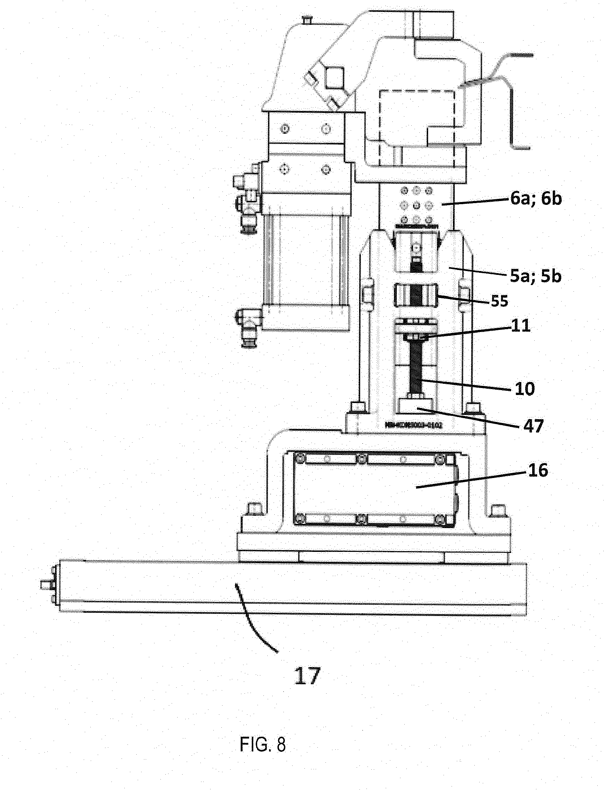

FIG. 8 is a perspective view of a modular vertical adjustment apparatus for positioning a workpiece where horizontal/lateral adjustment of a workpiece is performed by a horizontal guide 17. The horizontal displacement of the modular vertical adjustment apparatus is performed manually, or by means of a remotely controllable second electric motor.

## Claims

1. A modular vertical adjustment apparatus for positioning a workpiece comprising a clamping part, which consists of several exchangeable, interconnected components, the clamping part is fixed to the modular apparatus by means of a head part (1), the head part comprising an arm (1a) and plurality of fasteners provided in the arm (1a) and in the head part (1) for fixing the head part (1) to a vertical adjustment component (6a; 6b) and the clamping part to the arm (1a), wherein said modular vertical adjustment apparatus comprises
- two mutually compatible modules consisting of a base (5a; 5b) and the vertical adjustment component (6a; 6b), the base (5a; 5b) is a stationary part fixed to a bedplate (2) and the vertical adjustment component (6a; 6b) is a movable part, where the base (5a; 5b) and the vertical adjustment component (6a; 6b) each are shaped as a hollow component, the base (5a; 5b) has a hollow interior forming a cavity (31) and an open upper surface, the vertical adjustment component (6a; 6b) has a hollow interior forming a cavity (23) and an open lower surface, wherein the vertical adjustment component (6a; 6b) is sized and shaped to fit within the cavity (31) and to provide sliding of the vertical adjustment component (6a; 6b) along the hollow interior of the base (5a; 5b) in a vertical direction; and
- a screw shaft (10) and a pair of nuts (11) for vertically moving and fixing, at predetermined height, of the vertical adjustment component (6a; 6b) in respect of the base (5a; 5b), the screw shaft (10) is centrally extending along the cavity (31) of the base (5a; 5b) and the cavity (23) of the vertical adjustment component (6a; 6b).

2. The modular vertical adjustment apparatus according to claim 1, wherein comprising at least one tensioner (8; 30; 30a) for fixing and preventing shear dislocation of the vertical adjustment component (6a; 6b) within the base (5a; 5b).

3. The modular vertical adjustment apparatus according to claims 1 and 2, wherein a front side of the base (5a;5b) comprises two openings (20) divided by a vertical panel (13), the panel (13) comprises an opening (55) sized and shaped to receive a second tensioner (30a), a back panel (18) of the base (5a; 5b) comprises at least one bore (38) arranged in a vertical direction along a vertical centerline of the panel (18), the base (5a; 5b) further comprises two cogs (22), each cog (22) is laying in vertical direction along a vertically directed edges of the openings (20), the cogs (22) are facing each other and are in parallel relation to the back panel (18), an outer side surfaces (9) of the base (5a; 5b) are carried out as panels, and a bottom of the base (5a; 5b) comprises a bed plate (47) comprising at least one bore (48) for receiving and retaining the screw shaft (10).

4. The modular vertical adjustment apparatus according to claims 1 and 2, wherein a front side of the vertical adjustment component (6a; 6b) at lower part comprises an opening (27) of a rectangular shape with two vertically oriented mutually facing edges (39) and an upper portion of the front side of the vertical adjustment component (6a; 6b) is closed by a front panel (28), the opening (27) is arranged symmetrically in a vertical direction along a vertical centerline of the vertical adjustment component (6a; 6b), a back panel (26) of the vertical adjustment component (6a; 6b) comprises a plurality of through-bores (19) sized and shaped for receiving at least one fastener (37) to fasten the vertical adjustment component (6a; 6b) to the base (5a; 5b) by virtue of a first tensioner (8), a side walls of the vertical adjustment component (6a; 6b) are carried out as panels, and at a lower portion of the cavity (23) a second lateral plate (50) is provided, the second lateral plate (50) is in parallel relation to the bedplate (2), the second lateral plate (50) comprises a central bore (49) through which a screw shaft (10) passes, where one of the nuts (11) abuts on an upper side of the second lateral plate (50) and the other nut (11) abuts on an lower side the second lateral plate (50).

5. The modular vertical adjustment apparatus according to claims 1 to 4, wherein fixing and shear preventing of the vertical adjustment component (6a; 6b) in relation to the base (5a; 5b) is carried out by means of two third tensioners (30), each third tensioner (30) is mounted on an oppositely arranged surfaces (46) of each cog (22), each surface (46) is arranged in mutually parallel relation to one another and in parallel relation to the outer side surfaces (9) of the base (5a; 5b).

6. The modular vertical adjustment apparatus according to claim 5, wherein each vertically directed edge (39) of the opening (27) of the vertical adjustment component (6a; 6b) comprises a plurality of teeth forming a second toothed surface (42), the second toothed surface (42) is extending from the edge (39) in a lateral direction away of the edge (39) along a first contact surface (43), and each third tensioner (30) comprises a first toothed surface (41) which engage the second toothed surface (42), teeth of each said toothed surfaces are sized and shaped for mutual engagement, the first toothed surface (41) of each third tensioner (30) is arranged in orthogonal relation to each surface (46) of each cog (22), where each third tensioner (30) is fixed to the base (5a; 5b) by a releasable fastener (35) passing through a through-bore (40) arranged at the outer side surfaces (9) of the base (5a; 5b) to thereby releasably fasten the vertical adjustment component (6a; 6b) to the base (5a; 5b), where each third tensioner (30) includes at least one internal bore (12) having a threaded portion that threadingly engages the fastener (35).

7. The modular vertical adjustment apparatus according to claims 1 to 4, wherein fixing and shear preventing of the vertical adjustment component (6a; 6b) in relation to the base (5a; 5b) is carried out by means of a first tensioner (8) and a second tensioner (30a), each of said tensioners is positioned in a lateral plane in parallel to the bedplate (2), the second tensioner (30a) is arranged beneath and in parallel relation to the first tensioner (8).

8. The modular vertical adjustment apparatus according to claim 7, wherein the first tensioner (8) in a cross section has the form of an isosceles trapezoid with two sloped surfaces, the two sloped surfaces of the first tensioner (8) are abutting to a slanted vertical inner side walls (51) of the vertical adjustment component (6a; 6b), the first tensioner (8) comprises at least one internal through-bore (14) having a threaded portion that threadingly engages at least one fastener (37) to thereby fasten at the predetermined height the vertical adjustment component (6a; 6b) to the base (5a; 5b), the fastener (37) passes through the bore (38) of the back panel (18) to thereby releasably fasten the first tensioner (8) and the vertical adjustment component (6a; 6b) to the base (5a; 5b).

9. The modular vertical adjustment apparatus according to claim 7, wherein the second tensioner (30a) in a cross section has the form of a rectangular parallelepiped having two beveled edges (53), the beveled edges (53) are positioned to abut on the vertically oriented edge (39) of the vertical adjustment component (6a; 6b), the vertical wall (39) is correspondingly slanted and comprises the second toothed surface (42), where the beveled edges (53) comprise a toothed surface (41a) which engages the second toothed surface (42), teeth of each said toothed surfaces are sized and shaped for mutual engagement.

10. The modular vertical adjustment apparatus according to claim 9, wherein the second tensioner (30a) comprises a through-bore that is sized and shaped to receive a releasable fastener (45) to thereby releasably fasten the second tensioner (30a) to the base (5a; 5b), the releasable fastener (45) passes through a center of the second tensioner (30a) and through at least one through-bore arranged at the back panel (18), said through-bore having a threaded portion that threadingly engages the fastener (45) to thereby fix the vertical adjustment component (6a; 6b) to the base (5a; 5b).

11. The modular vertical adjustment apparatus according to claims 1 to 4, wherein a plurality of semi-circular holes (34) are arranged in the base (5a; 5b) and a plurality of semi-circular counter holes (33) are arranged in the vertical adjustment component (6a; 6b), the plurality of semi-circular holes (34) and correspondingly arranged the plurality of semi-circular counter holes (33) are set to mutually face each other, the semi-circular holes (34;33) are mutually interlocked by at least one stud bolt (32), where each outer side surface (9) of the base (5a; 5b), along a vertical plane passing through mutually facing the first contact surface (43) and a second contact (44), comprises a plurality of through-bores (40) sized and shaped to receive at least one stud bolt (32) to thereby fasten at the predetermined height the vertical adjustment component (6a; 6b) to the base (5a; 5b).

12. The modular vertical adjustment apparatus according to claim 11, wherein the plurality of semi-circular holes (34) are arranged in parallel and extend horizontally along the second contact surface (44) of the cog (22), the second contact surface (44) is directed towards the cavity (31) of the base (5a; 5b), the plurality of semi-circular counter holes (33) are arranged in parallel and extend horizontally from the edge (39) along the first contact surface (43) of the vertical adjustment component (6a; 6b), the edge (39) and the first contact surface (43) abut on the cog (22) and on the second contact surface (44) of the base (5a; 5b).

13. The modular vertical adjustment apparatus according to any of preceding claims, wherein said apparatus further comprises a bracket (7), the bracket (7) comprises at least four through-bores (25) that are sized and shaped to receive releasable fasteners to thereby releasably fasten a foot part (3) of the base (5a; 5b) to an upper flat surface of the bracket (7).

14. The modular vertical adjustment apparatus according to any of preceding claims, wherein vertically moving and fixing, at predetermined height, of the vertical adjustment component (6a; 6b) in respect of the base (5a; 5b) is performed manually, or by means of an electric motor (16).

15. The modular vertical adjustment apparatus according to claim 14, wherein the electric motor (16) is arranged beneath the modular vertical adjustment apparatus and operably connected to the screw shaft (10), the electric motor (16) is a remotely controllable electric motor (16).

16. The modular vertical adjustment apparatus according to claims 14 and 15, wherein the modular vertical adjustment apparatus is arranged on a horizontal guide (17) providing a horizontal displacement, the horizontal displacement of the modular vertical adjustment apparatus is performed manually, or by means of a remotely controllable second electric motor.

## Patentansprüche

1. Eine Vorrichtung zur modularen vertikalen Anpassung zur Positionierung eines Werkstücks, bestehend aus einem Spannteil, das aus mehreren austauschbaren, miteinander verbundenen Komponenten besteht, der Spannteil ist mittels eines Kopfteils (1) an der Vorrichtung zur modularen vertikalen Anpassung befestigt, der Kopfteil umfasst einen Arm (1a) und mehrere Befestigungselemente im Arm (1a) und im Kopfteil (1) zur Befestigung des Kopfteils (1) an der Komponente zur vertikalen Anpassung (6a; 6b) und des Spannteils am Arm (1a), wobei die genannte Vorrichtung zur modularen vertikalen Anpassung umfasst
- zwei miteinander kompatible Module, bestehend aus einem Sockel (5a; 5b) und der Komponente zur vertikalen Anpassung (6a; 6b), der Sockel (5a; 5b) ist ein stationäres Teil, das an einer Grundplatte (2) befestigt ist, und die Komponente zur vertikalen Anpassung (6a; 6b) ist ein bewegliches Teil, wobei der Sockel (5a; 5b) und die Komponente zur vertikalen Anpassung (6a; 6b) als Hohlbauteile geformt sind, der Sockel (5a; 5b) hat einen hohlen Innenraum, der einen Hohlraum (31) bildet, und eine offene Oberseite, die Komponente zur vertikalen Anpassung (6a; 6b) hat einen hohlen Innenraum, der einen Hohlraum (23) bildet, und eine offene Unterseite, wobei die Komponente zur vertikalen Anpassung (6a; 6b) so bemessen und geformt ist, dass sie in den Hohlraum (31) passt und ein Gleiten der Komponente zur vertikalen Anpassung (6a; 6b) entlang des hohlen Inneren des Sockels (5a; 5b) in vertikaler Richtung ermöglicht, und
- eine Schraubenwelle (10) und ein Paar Muttern (11) zum vertikalen Bewegen und Fixieren der Komponente zur vertikalen Anpassung (6a; 6b) in Bezug auf den Sockel (5a; 5b) in einer vorbestimmten Höhe, wobei sich die Schraubenwelle (10) mittig entlang des Hohlraums (31) des Sockels (5a; 5b) und des Hohlraums (23) der Komponente zur vertikalen Anpassung (6a; 6b) erstreckt.

2. Eine Vorrichtung zur modularen vertikalen Anpassung nach Anspruch 1, wobei die mindestens einen Spanner (8; 30; 30a) zum Fixieren und Verhindern der Scherverschiebung der Komponente zur vertikalen Anpassung (6a; 6b) innerhalb des Sockels (5a; 5b) umfasst.

3. Eine Vorrichtung zur modularen vertikalen Anpassung nach Ansprüchen 1 und 2, wobei sich auf der Vorderseite des Sockels (5a; 5b) zwei Öffnungen (20) befinden, die durch eine vertikale Platte (13) geteilt sind, wobei die Platte (13) eine Öffnung (55) aufweist, die so bemessen und geformt ist, dass sie einen zweiten Spanner (30a) aufnehmen kann, die Rückwand (18) des Sockels hat (5a; 5b) mindestens eine Bohrung (38), die in vertikaler Richtung entlang der vertikalen Mittellinie der Wand (18) angeordnet ist, der Sockel (5a; 5b) umfasst außerdem zwei Zahnräder (22), wobei jedes Zahnrad (22) in vertikaler Richtung entlang der vertikal gerichteten Kante der Öffnungen (20) angeordnet ist, die Zahnräder (22) sind einander zugewandt und stehen parallel zur Rückwand (18), die äußeren Seitenflächen (9) des Sockels (5a; 5b) sind als Platten ausgeführt, und der Boden des Sockels (5a; 5b) besteht aus einer Grundplatte (47) mit mindestens einer Bohrung (48) zur Aufnahme und Halterung der Schraubenwelle (10).

4. Eine Vorrichtung zur modularen vertikalen Anpassung nach Ansprüchen 1 und 2, wobei die Vorderseite der Komponente zur vertikalen Anpassung (6a; 6b) im unteren Teil eine rechteckige Öffnung (27) mit zwei vertikal ausgerichteten, einander zugewandten Kanten (39) aufweist, und der obere Abschnitt der Vorderseite der Komponente zur vertikalen Anpassung (6a; 6b) durch eine Frontplatte (28) verschlossen und die Öffnung (27) symmetrisch vertikal entlang der vertikalen Mittellinie der Komponente zur vertikalen Anpassung (6a; 6b) angeordnet ist, die Rückwand (26) der modularen Komponente zur vertikalen Anpassung (6a; 6b) eine Vielzahl von Durchgangsbohrungen (19) aufweist, die so bemessen und geformt sind, dass sie mindestens ein Befestigungselement (37) zur Befestigung der Komponente zur vertikalen Anpassung (6a; 6b) am Sockel (5a; 5b) mittels des ersten Spanners (8) aufnehmen können, die Seitenwände der Komponente zur vertikalen Anpassung (6a; 6b) sind als Platten ausgeführt, und am unteren Teil des Hohlraums (23) ist eine zweite Seitenplatte (50) vorgesehen, die zweite Seitenplatte (50) ist parallel zur Grundplatte (2) angeordnet, die zweite Seitenplatte (50) weist eine zentrale Bohrung (49) auf, durch die eine Schraubenwelle (10) verläuft, wobei eine der Muttern (11) an einer Oberseite der zweiten Seitenplatte (50) und die andere Mutter (11) an einer Unterseite der zweiten Seitenplatte (50) anliegen.

5. Eine Vorrichtung zur modularen vertikalen Anpassung nach Ansprüchen 1 bis 4, wobei der die Fixierung und Verhinderung der Scherbewegungen der Komponente zur vertikalen Anpassung (6a; 6b) in Bezug auf den Sockel (5a; 5b) mittels zweier dritten Spanner (30) erfolgt, wobei jeder dritte Spanner (30) auf einer gegenüberliegend angeordneten Fläche (46) jedes Zahnrads angebracht ist, jede Fläche (46) ist in einer parallelen Beziehung zueinander und in einer parallelen Beziehung zu den äußeren Seitenflächen (9) des Sockels (5a; 5b) angeordnet.

6. Eine Vorrichtung zur modularen vertikalen Anpassung nach Anspruch 5, wobei jede vertikal gerichtete Kante (39) der Öffnung (27) der Komponente zur vertikalen Anpassung (6a; 6b) eine Vielzahl von Zähnen umfasst, die eine zweite gezahnte Fläche (42) bilden, die zweite gezahnte Fläche (42) erstreckt sich von der Kante (39) in einer seitlichen Richtung von der Kante (39) entlang der ersten Kontaktfläche (43), und jeder dritte Spanner (30) umfasst die erste gezahnte Fläche (41), die mit der zweiten gezahnten Fläche (42) in Eingriff steht, die Zähne jeder dieser gezahnten Flächen sind so bemessen und geformt, dass sie ineinandergreifen, die erste gezahnte Fläche (41) jedes dritten Spanners (30) ist in orthogonaler Beziehung zu jeder Fläche (46) jedes Zahns (22) angeordnet, wobei jeder dritte Spanner (30) am Sockel (5a; 5b) durch ein lösbares Befestigungselement (35) befestigt ist, das durch eine Durchgangsbohrung (40) hindurchgeht, die sich an den äußeren Seitenflächen (9) des Sockels (5a; 5b) befindet, um dadurch die Komponente zur vertikalen Anpassung (6a; 6b) lösbar am Sockel (5a; 5b) zu befestigen, wobei jeder dritte Spanner (30) mindestens eine Innenbohrung (12) mit einem Gewindeabschnitt aufweist, der mit dem Befestigungselement (35) in Gewindeeingriff steht.

7. Eine Vorrichtung zur modularen vertikalen Anpassung nach Ansprüchen 1 bis 4, wobei die Fixierung und Verhinderung der Scherverschiebung der Komponente zur vertikalen Anpassung (6a; 6b) in Bezug auf den Sockel (5a; 5b) mittels des ersten Spanners (8) und des zweiten Spanners (30a) erfolgt, wobei jeder Spanner in einer seitlichen Ebene parallel zur Grundplatte (2) angeordnet ist, der zweite Spanner ist (30a) unterhalb und parallel zum ersten Spanner (8) angeordnet.

8. Eine Vorrichtung zur modularen vertikalen Anpassung nach Anspruch 7, wobei die erste Spannvorrichtung (8) im Querschnitt die Form eines gleichschenkligen Trapezes mit zwei schrägen Flächen hat, wobei die beiden schrägen Flächen der ersten Spannvorrichtung (8) an der schrägen vertikalen inneren Seitenwand (51) der Komponente zur vertikalen Anpassung (6a; 6b) anliegen, der erste Spanner (8) weist mindestens eine innere Durchgangsbohrung (14) mit einem Gewindeabschnitt auf, der mit mindestens einem Befestigungselement (37) in Gewindeeingriff steht, um dadurch die Komponente zur vertikalen Anpassung (6a; 6b) in der vorbestimmten Höhe am Sockel (5a; 5b) zu befestigen, das Befestigungselement (37) geht durch die Bohrung (38) der Rückwand (18) hindurch, um dadurch den ersten Spanner (8) und die Komponente zur vertikalen Anpassung (6a; 6b) am Sockel (5a; 5b) lösbar zu befestigen.

9. Eine Vorrichtung zur modularen vertikalen Anpassung nach Anspruch 7, wobei der zweite Spanner (30a) im Querschnitt die Form eines Parallelepipeds mit zwei abgeschrägten Kanten (53) aufweist, die abgeschrägten Kanten (53) sind so positioniert, dass sie an der vertikal ausgerichteten Kante (39) der Komponente zur vertikalen Anpassung (6a; 6b) anliegen, die vertikale Wand (39) ist dabei entsprechend abgeschrägt und umfasst die zweite verzahnte Fläche (42), wobei die abgeschrägten Kanten (53) eine verzahnte Fläche (41a) umfassen, die in die zweite verzahnte Fläche (42) eingreift, wobei die Zähne jeder der verzahnten Flächen für einen gegenseitigen Eingriff dimensioniert und geformt sind.

10. Eine Vorrichtung zur modularen vertikalen Anpassung nach Anspruch 9, wobei der zweite Spanner (30a) eine Durchgangsbohrung umfasst, die so bemessen und geformt ist, dass sie ein lösbares Befestigungselement (45) aufnehmen kann, um dadurch den zweiten Spanner (30a) lösbar am Sockel (5a; 5b) zu befestigen, wobei das lösbare Befestigungselement (45) durch die Mitte des zweiten Spanners (30a) und durch mindestens eine an der Rückwand (18) angeordnete Durchgangsbohrung verläuft, wobei die Durchgangsbohrung einen Gewindeabschnitt aufweist, der mit dem Befestigungselement (45) in Gewindeeingriff steht, um dadurch die Komponente zur vertikalen Anpassung (6a; 6b) am Sockel (5a; 5b) zu befestigen.

11. Eine Vorrichtung zur modularen vertikalen Anpassung nach Ansprüchen 1 bis 4, wobei mehrere halbkreisförmige Löcher (34) im Sockel (5a; 5b) und mehrere halbkreisförmige Gegenlöcher (33) in der Komponente zur vertikalen Anpassung (6a; 6b) angeordnet sind, wobei mehrere halbkreisförmige Löcher (34) und die entsprechend angeordneten mehreren halbkreisförmigen Gegenlöcher (33) so eingestellt sind, dass sie einander gegenüberliegen, die halbkreisförmigen Löcher (34; 33) sind dabei durch mindestens einen Stehbolzen (32) miteinander verriegelt, wobei jede äußere Seitenfläche (9) des Sockels (5a; 5b) entlang der vertikalen Ebene, die durch die erste Kontaktfläche (43) und eine zweite Kontaktfläche (44), die einander gegenüberliegen, verläuft, eine Vielzahl von Durchgangsbohrungen (40) aufweist, die so bemessen und geformt sind, dass sie mindestens einen Bolzen (32) aufnehmen können, um dadurch die Komponente zur vertikalen Anpassung (6a; 6b) in der vorbestimmten Höhe am Sockel (5a; 5b) zu befestigen.

12. Eine Vorrichtung zur modularen vertikalen Anpassung nach Anspruch 11, wobei mehrere halbkreisförmige Löcher (34) parallel angeordnet sind und sich horizontal entlang der zweiten Kontaktfläche (44) des Zahnrads (22) erstrecken, die zweite Kontaktfläche (44) ist dabei auf den Hohlraum (31) des Sockels (5a; 5b) gerichtet, mehrere halbkreisförmige Gegenlöcher (33) sind parallel angeordnet und sind sich horizontal von der Kante (39) entlang der ersten Kontaktfläche (43) der Komponente zur vertikalen Anpassung (6a; 6b), wobei die Kante (39) und die erste Kontaktfläche (43) an dem Zahnrad (22) und an der zweiten Kontaktfläche (44) des Sockels (5a; 5b) anliegen.

13. Eine Vorrichtung zur modularen vertikalen Anpassung nach einem der vorhergehenden Ansprüche, wobei die Vorrichtung zudem eine Halterung (7) umfasst, wobei die Halterung (7) mindestens vier Durchgangsbohrungen (25) umfasst, die so bemessen und geformt sind, dass sie lösbare Befestigungsmittel aufnehmen, um dadurch den Fußteil (3) des Sockels (5a; 5b) lösbar an einer oberen flachen Oberfläche des Trägers (7) zu befestigen.

14. Eine Vorrichtung zur modularen vertikalen Anpassung nach einem der vorhergehenden Ansprüche, wobei das vertikale Bewegen und Fixieren der Komponente zur vertikalen Anpassung (6a; 6b) in Bezug auf den Sockel (5a; 5b) in einer vorbestimmten Höhe manuell oder mittels eines Elektromotors (16) durchgeführt wird.

15. Eine Vorrichtung zur modularen vertikalen Anpassung zur Positionierung eines Werkstücks nach Anspruch 14, wobei der Elektromotor (16) unterhalb der Vorrichtung zur modularen vertikalen Anpassung angeordnet und mit der Schraubenwelle (10) funktionsfähig verbunden ist, wobei der Elektromotor (16) ein fernsteuerbarer Elektromotor (16) ist.

16. Eine Vorrichtung zur modularen vertikalen Anpassung zur Positionierung eines Werkstücks nach Ansprüchen 14 und 15, wobei die Vorrichtung zur modularen vertikalen Anpassung auf einer horizontalen Führung (17) angeordnet ist, die eine horizontale Verschiebung ermöglicht, wobei die horizontale Verschiebung der Vorrichtung zur modularen vertikalen Anpassung manuell oder mittels eines fernsteuerbaren zweiten Elektromotors erfolgt.

## Revendications

1. Un appareil de réglage vertical modulaire pour positionner une pièce dans des systèmes de serrage, qui comprend une pièce de serrage qui comprend plusieurs composants interchangeables interconnectés, la pièce de serrage étant fixée à l'appareil modulaire au moyen de la tête (1), la tête comprenant un bras (1a) et plusieurs attaches fournies dans le bras (1a) et dans la tête (1) pour fixer la tête (1) au composant de réglage vertical (6a ; 6b) et la pièce de serrage au bras (1a), dans lequel appareil de réglage vertical modulaire comprend
- deux modules mutuellement compatibles composé d'une base (5a ; 5b) et du composant de réglage vertical (6a ; 6b), la base (5a ; 5b) est une partie fixe fixée sur la plaque d'assise (2) et le composant de réglage vertical (6a ; 6b) est une partie mobile, où la base (5a ; 5b) et le composant de réglage vertical (6a ; 6b) sont tous les deux en forme d'un composant creux, la base (5a ; 5b) a un intérieur creux formant une cavité (31) et une surface supérieure ouverte, le composant de réglage vertical (6a ; 6b) a un intérieur creux formant une cavité (23) et une surface inférieure ouverte, **caractérisé en ce que** le composant de réglage vertical (6a ; 6b) est dimensionné et façonné pour entrer dans la cavité (31) et pour assurer le glissement du composant de réglage vertical (6a ; 6b) le long de l'intérieur creux de la base (5a ; 5b) dans le sens vertical ; et
- un arbre à vis (10) et une paire d'écrous (11) pour le déplacement vertical, et la fixation à une hauteur prédéterminée, du composant de réglage vertical (6a ; 6b) par rapport à la base (5a ; 5b), l'arbre à vis (10) s'étendant centralement le long de la cavité (31) de la base (5a ; 5b) et la cavité (23) du composant de réglage vertical (6a ; 6b).

2. L'appareil de réglage vertical modulaire suivant la revendication 1, **caractérisé en ce qu'**il comprend au moins un tendeur (8 ; 30 ; 30a) pour la fixation et la prévention de la dislocation par cisaillement du composant de réglage vertical (6a ; 6b) à l'intérieur de la base (5a ; 5b).

3. L'appareil de réglage vertical modulaire suivant les revendications 1 et 2, **caractérisé en ce que** la face avant de la base (5a ;5b) comprend deux ouvertures (20) divisées par un panneau vertical (13), le panneau (13) comprend une ouverture (55) dimensionnée et façonnée pour recevoir un deuxième tendeur (30a), le panneau arrière (18) de la base (5a ; 5b) comprend au moins un alésage (38) disposé dans le sens vertical le long de l'axe vertical du panneau (18), la base (5a ; 5b) comprend en outre deux rouages (22), chaque rouage (22) est posé dans le sens vertical le long des bords des ouvertures dirigées verticalement (20), les rouages (22) se font face et sont en relation parallèle avec le panneau arrière (18), les surfaces latérales extérieures (9) de la base (5a ; 5b) sont réalisés sous forme de panneaux, et le fond de la base (5a ; 5b) comprend une plaque d'assise (47) comprenant au moins un alésage (48) pour recevoir et retenir l'arbre à vis (10).

4. L'appareil de réglage vertical modulaire suivant les revendications 1 et 2, **caractérisé en ce que** la face avant du composant de réglage vertical (6a ; 6b) comprend à la partie inférieure une ouverture (27) de forme rectangulaire avec deux bords tournés l'un vers l'autre orientés verticalement (39) et la partie supérieure de la face avant du composant de réglage vertical (6a ; 6b) est fermée par le panneau avant (28), l'ouverture (27) est disposée symétriquement dans le sens vertical le long de l'axe vertical du composant de réglage vertical (6a ; 6b), le panneau arrière (26) du composant de réglage vertical (6a ; 6b) comprend plusieurs alésages traversants (19) dimensionnés et façonnés pour recevoir au moins une attache (37) pour attacher le composant de réglage vertical (6a ; 6b) à la base (5a ; 5b) au moyen du premier tendeur (8), les parois latérales du composant de réglage vertical (6a ; 6b) sont réalisées sous forme de panneaux, et à la partie inférieure de la cavité (23) une deuxième plaque latérale (50) est fournie, la deuxième plaque latérale (50) est en relation parallèle avec la plaque d'assise (2), la deuxième plaque latérale (50) comprend un alésage central (49) par lequel passe un arbre à vis (10), où un des écrous (11) jouxte la face supérieure de la deuxième plaque latérale (50) et l'autre écrou (11) jouxte la face inférieure de la deuxième plaque latérale (50).

5. L'appareil de réglage vertical modulaire suivant les revendications 1 à 4, **caractérisé en ce que** la fixation et la prévention du cisaillement du composant de réglage vertical (6a ; 6b) par rapport à la base (5a ; 5b) sont réalisées au moyen de deux troisièmes tendeurs (30), chaque troisième tendeur (30) est monté sur des surfaces disposées de manière opposée (46) de chaque surface de chaque rouage (22), chaque surface (46) est disposée parallèlement l'une à l'autre et parallèlement aux surfaces latérales extérieures (9) de la base (5a ; 5b).

6. L'appareil de réglage vertical modulaire suivant la revendication 5, **caractérisé en ce que** chaque bord en direction verticale (39) de l'ouverture (27) du composant de réglage vertical (6a ; 6b) comprend plusieurs dents formant une deuxième surface dentée (42), la deuxième surface dentée (42) s'étend depuis le bord (39) dans une direction latérale à l'opposé du bord (39) le long de la première surface de contact (43), et chaque troisième tendeur (30) comprend une première surface dentée (41) qui engage la deuxième surface dentée (42), les dents de chaque surface dentée sont dimensionnées et façonnées pour s'engager mutuellement, la première surface dentée (41) de chaque troisième tendeur (30) est disposée en relation orthogonale à chaque surface (46) de chaque rouage (22), où chaque troisième tendeur (30) est fixé à la base (5a ; 5b) par une attache amovible (35) passant par un alésage traversant (40) disposé sur les surfaces latérales extérieures (9) de la base (5a ; 5b) pour ainsi attacher de manière amovible le composant de réglage vertical (6a ; 6b) à la base (5a ; 5b), où chaque troisième tendeur (30) comprend au moins un alésage interne (12) ayant une partie filetée qui engage l'attache par filetage (35).

7. L'appareil de réglage vertical modulaire suivant les revendications 1 à 4, **caractérisé en ce que** la fixation et la prévention du cisaillement du composant de réglage vertical (6a ; 6b) par rapport à la base (5a ; 5b) sont réalisées au moyen d'un premier tendeur (8) et d'un deuxième tendeur (30a), chaque desdits tendeurs est positionné dans un plan latéral parallèle à la plaque d'assise (2), le deuxième tendeur (30a) est disposé sous et en relation parallèle au premier tendeur (8).

8. L'appareil de réglage vertical modulaire suivant la revendication 7, **caractérisé en ce que** le premier tendeur (8) dans une section transversale a la forme d'un trapèze isocèle avec deux surfaces inclinées, les deux surfaces inclinées du premier tendeur (8) sont attenantes aux parois latérales intérieures verticales inclinées (51) du composant de réglage vertical (6a ; 6b), le premier tendeur (8) comprend au moins un alésage traversant interne (14) ayant une partie filetée qui engage au moins one attache par filetage (37) pour fixer ainsi à la hauteur prédéterminée le composant de réglage vertical (6a ; 6b) à la base (5a ; 5b), l'attache (37) passe par l'alésage (38) du panneau arrière (18) pour attacher ainsi de manière amovible le premier tendeur (8) et le composant de réglage vertical (6a ; 6b) à la base (5a ; 5b).

9. L'appareil de réglage vertical modulaire suivant la revendication 7, **caractérisé en ce que** the deuxième tendeur (30a) en coupe transversale a la forme d'un parallélépipède rectangle ayant deux bords biseautés (53), les bords biseautés (53) sont positionnés pour jouxter le bord orienté verticalement (39) du composant de réglage vertical (6a ; 6b), la paroi verticale (39) est en conséquence inclinée et comprend la deuxième surface dentée (42), où les bords biseautés (53) comprennent une surface dentée (41a) qui engage la deuxième surface dentée (42), les dents de chaque desdites surfaces dentées sont dimensionnées et façonnées pour s'engager mutuellement.

10. L'appareil de réglage vertical modulaire suivant la revendication 9, **caractérisé en ce que** le deuxième tendeur (30a) comprend un alésage traversant qui est dimensionnée et façonnée pour recevoir une attache amovible (45) pour fixer ainsi de manière amovible le deuxième tendeur (30a) à la base (5a ; 5b), l'attache amovible (45) passe par le centre du deuxième tendeur (30a) et par au moins un alésage traversant disposé sur le panneau arrière (18), ledit alésage traversant ayant une partie filetée qui engage l'attache par filetage (45) pour ainsi fixer le composant de réglage vertical (6a ; 6b) à la base (5a ; 5b).

11. L'appareil de réglage vertical modulaire suivant les revendications 1 à 4, **caractérisé en ce que** plusieurs des trous semi-circulaires (34) sont disposés dans la base (5a ; 5b) et plusieurs contre-trous semi-circulaires (33) sont disposés dans le composant de réglage vertical (6a ; 6b) la pluralité des trous semi-circulaires (34) et la pluralité des contre-trous semi-circulaires agencés de manière correspondante (33) sont disposés en vis-à-vis les uns des autres, les trous semi-circulaires (34 ;33) sont mutuellement verrouillés par au moins un goujon (32), où chaque surface latérale extérieure (9) de la base (5a ; 5b), le long un plan vertical passant par la première surface de contact (43) et un deuxième contact se faisant face (44), comprend plusieurs alésages traversants (40) dimensionnés et façonnés pour recevoir au moins un goujon (32) pour fixer ainsi à la hauteur prédéterminée le composant de réglage vertical (6a ; 6b) à la base (5a ; 5b).

12. L'appareil de réglage vertical modulaire suivant la revendication 11, **caractérisé en ce que** la pluralité des trous semi-circulaires (34) est disposée parallèlement et s'étend horizontalement le long de la deuxième surface de contact (44) du rouage (22), la deuxième surface de contact (44) est orientée vers la cavité (31) de la base (5a ; 5b), la pluralité des contre-trous semi-circulaires (33) est disposés parallèlement et s'étend horizontalement à partir du bord (39) le long le premier surface de contact (43) du composant de réglage vertical (6a ; 6b), le bord (39) et la première surface de contact (43) jouxtent le rouage (22) et la deuxième surface de contact (44) de la base (5a ; 5b).

13. L'appareil de réglage vertical modulaire suivant l'une quelconque des revendications précédentes, **caractérisé en ce que** ledit appareil comprend en outre un support (7), le support (7) comprend au moins quatre alésages traversants (25) qui sont dimensionnés et façonnés pour recevoir les attaches amovibles pour fixer ainsi de manière amovible le pied (3) de la base (5a ; 5b) à la surface plate supérieure du support (7).

14. L'appareil de réglage vertical modulaire suivant l'une quelconque des revendications précédentes, **caractérisé en ce que** le mouvement vertical, et la fixation à une hauteur prédéterminée, du composant de réglage vertical (6a ; 6b) par rapport à la base (5a ; 5b) sont opérés manuellement, ou au moyen d'un moteur électrique (16).

15. L'appareil de réglage vertical modulaire suivant la revendication 14, **caractérisé en ce que** le moteur électrique (16) est disposé sous l'appareil de réglage vertical modulaire et connecté de manière fonctionnelle à l'arbre à vis (10), le moteur électrique (16) est un moteur électrique à télécommande (16).

16. L'appareil de réglage vertical modulaire suivant les revendications 14 et 15, **caractérisé en ce que** l'appareil de réglage vertical modulaire est disposé sur un guide horizontal (17) assurant un déplacement horizontal, le déplacement horizontal de l'appareil de réglage vertical modulaire est opéré manuellement, ou au moyen d'un deuxième moteur électrique à télécommande.
